# EUROPÄISCHE PATENTANMELDUNG

(11) **EP 0 923 178 A2**
(43) Veröffentlichungstag der Anmeldung: **16.06.1999**
(21) Anmeldenummer: 98115644.1
(22) Anmeldetag: 19.08.1998
(51) Int. Cl.: H02G 15/013

(54) **Kabelmuffe, bestehend aus einem Muffenrohr und mindestens einem stirnseitigen, quergeteilten Dichtungskörper**

(30) Priorität: 09.12.1997 DE 19754608
(71) Anmelder: RXS Kabelgarnituren Gesellschaft mit beschränkter Haftung, 58093 Hagen (DE)
(72) Erfinder: Müller, Thorsten, 58708 Menden (DE); Zimmer, Rainer, 58579 Schalksmühle (DE)
(74) Vertreter: Epping, Wilhelm, Dr.-Ing.

(57) **Zusammenfassung**

Bei der Erfindung handelt es sich um eine Kabelmuffe aus zwei Dichtungskörpern (DK2, DK3) mit anpaßbaren Kabeleinführungsöffnungen (KE) und integrierbarer Kabelabfangvorrichtung (KAB). Die Anpassung in den Kabeleinführungsöffnungen (KE) erfolgt durch Austrennen von konzentrischen Anpassungsringen (AR), wobei die Anzahl der auszutrennenden Anpassungsringe (AR) und die Stärke eines aufzubringenden Dichtungswickels (DW) mit Hilfe einer Maßlehre (ML) bestimmt werden.

## Beschreibung

Die Erfindung betrifft eine Kabelmuffe, bestehend aus einem Muffenrohr und mindestens einem stirnseitigen, quergeteilten Dichtungskörper mit anpaßbaren Kabeleinführungsöffnungen, wobei die Anpassung durch Austrennen von konzentrisch angeordneten Anpassungsringen erfolgt.

Aus der DE-PS 24 27 677 ist ein Dichtungskörper für eine Kabelmuffe bekannt, bei dem die Kabeleinführungsöffnungen mit Hilfe von speziellen Bohrwerkzeugen eingeschnitten werden.

Aus der europäischen Patentanmeldung 0 440 903 - A1 ist ein Anpassungselement für den Abschluß von Einführungsöffnungen bei Kabelgarnituren, Rohrzügen und ähnlichen Vorrichtungen bekannt. Die Durchmesseranpassung zu den eingeführten Gegenständen, zum Beispiel zu Kabeln, erfolgt in einer Abschlußwandung, die aus konzentrischen austrennbaren Dichtungsringen gebildet wird.

Aus der US-Patentschrift 5.235.134 ist eine Topfmuffe bekannt, bei der am Einführungsende ein Dichtungskörper angeordnet wird, in dem ein Dichtungseinsatz aus kompressiblem Material eingesetzt wird. Dieser Dichtungseinsatz wird aus konzentrischen Ringen gebildet. Die Anpassung der Kabeleinführungsöffnung an den Durchmesser des Kabels erfolgt durch Austrennen der konzentrischen Ringe. Die Abdichtung wird durch axiale Kompression mit Hilfe von entsprechenden Druckmitteln erreicht.

Für vorliegende Erfindung stellt sich die Aufgabe, eine Kabelmuffe der oben genannten Art zu verbessern, wobei insbesondere die Kabeleinführungen für geschnittene und ungeschnittene Kabel universell und individuell anpaßbar gestaltet werden sollen. Die gestellte Aufgabe wird gemäß der Erfindung mit einer Kabelmuffe der eingangs erläuterten Art dadurch gelöst, daß der Dichtungskörper aus zwei in Kabelachsrichtung hintereinander liegenden Wandungen gebildet ist, daß die Wandungen in den Kabeleinführungsöffnungen aus den austrennbaren, konzentrisch angeordneten Anpassungsringen gebildet sind, daß in den Kabeleinführungsöffnungen zwischen den beiden Wandungen jeweils ein Hohlraum für eine Kabelabfangvorrichtung angeordnet ist, daß die an den Kabeln zu montierenden Kabelabfangvorrichtungen in die Hohlräume beim Einführen der Kabel in die Kabeleinführungsöffnungen einsenkbar sind, daß jeweils ein Dichtungswickel aus plastischem Dichtungsmaterial in den Bereichen der Wandungen der Kabeleinführungsöffnungen auf den einzuführenden Kabeln angeordnet ist, wobei die Wandungen des Dichtungskörpers in den Trennebenen Dichtungsnuten aufweisen.

Die Kabelmuffe gemäß der Erfindung besteht aus einem Muffenrohr und mindestens einem Dichtungskörper zur Kabeleinführung, wobei der Dichtungskörper quergeteilt ist und aus zwei in axialer Richtung gesehen hintereinander liegenden Wandungen aufgebaut ist. Am äußeren Umfang sind die beiden Wandungen mit einer zylindrischen oder ovalen Wandung zusammengehalten, wobei in dieser zylindrischen Wandung eine Nut zur Aufnahme einer Dichtung gegenüber dem umfassenden Muffenrohr ausgebildet ist. Die Dichtungskörper bestehen aus zwei bzw. drei Dichtungskörpersegmenten, die mittels vorzugsweise selbstschneidenden Schrauben über den einzuführenden Kabeln zusammengepreßt werden. Die Abdichtung in der jeweiligen Trennebene des Dichtungskörpers und in der Kabeleinführungsöffnung zum Kabel hin erfolgt mit plastischem Dichtungsmaterial in Form eines Dichtungswickels. In den Trennebenen der Wandungen des Dichtungskörpers befinden sich Nuten, die eine bessere Verpressung des eingelegten Dichtungswickels ermöglichen. Die Dichtungskörper können bei Bedarf mit einem Ventil oder mit einer Erddurchführung ausgestattet werden.

Die Kabeleinführungsöffnungen in den Dichtungskörpern werden durch Austrennen von konzentrischen Anpassungsringen nach dem 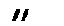 Zwiebelringprinzip" gebildet. Die einzelnen konzentrischen Anpassungsringe hängen über nutenförmige Abstufungen zusammen und werden in diesen verdünnten Nuten mit Hilfe einer Zange oder einem Messer ausgeschnitten. Die Schneide der Zange ist dabei so ausgeformt, daß sowohl der kleinste als auch der größte Radius herausgeschnitten werden kann. Das Herausschneiden erfolgt zweckmäßigerweise in mehreren aufeinander folgenden Schritten bis zum erforderlichen Ausschnitt. Da der Dichtungskörper bzw. auch die Dichtungskörpersegmente jeweils aus zwei Wandungen mit einem dazwischen liegenden Hohlraum gebildet ist, müssen beide Wandungen auf den entsprechenden Durchmesser ausgeschnitten werden. In dem dazwischen gebildeten Hohlraum wird die mechanische Kabelabfangung fixiert. Diese besteht zum Beispiel aus einem Blech mit Durchrissen, welches mit einer Schlauchschelle oder Spannband am Kabel befestigt wird.

Je nach dem Durchmesser des einzuführenden Kabels wird eine entsprechende Anzahl von Anpassungsringen entfernt und zur Abdichtung ein Dichtungsbandwickel auf das Kabel aufgebracht. Zur Ermittlung der Anzahl der auszutrennenden Anpassungsringe wird eine Lehre verwendet, mit der die Anzahl der zu entfernenden Anpassungsringe wie auch der Durchmesser des aufzubringenden Dichtungswickels ermittelt werden kann. Weiterhin weist diese Lehre auch Ansätze auf, die in entsprechende seitliche Eingriffe des Dichtungskörpers eingeführt werden können, wenn die Dichtungskörpersegmente im richtigen Abstand aufgepreßt sind. Auf diese Weise wird indirekt kontrolliert, ob der Dichtungsdruck durch das Aufpressen der Dichtungskörpersegmente ausreichend ist.

Zusätzlich befindet sich am Dichtungskörper bzw. an den Dichtungskörpersegmenten auf der Außenseite eine zusätzliche, federnde Dichtlippe, die sich beim Verschließen an das Muffenrohr anlegt und auf diese Weise einen Spritzwasser- und Staubschutz bildet. Weiterhin sind an den Dichtungskörpern jeweils vier Anschraubpunkte bzw. Ansätze angeformt, an denen Befestigungselemente zur Fixierung der Muffe an einem Tragseil, an einer Wand oder an einem Mast angeschraubt werden können. Außerdem befinden sich an den Dichtungskörpern bzw. Dichtungskörpersegmenten Aufnahmen zum Einrasten von Verbindungsschienen, die dazu dienen die Dichtungskörper im Abstand zu halten. Außerdem ist möglich, zusätzliche Elemente, wie zum Beispiel Aufnahmen für Spleißkassetten und dergleichen an den Verbindungsschienen anzusetzen.

Das längsgeschlitzte Muffenrohr der Kabelmuffe besitzt entlang des Längsschlitzes entsprechend geformte Verschlußwülste, an denen Verschlußelemente unverlierbar eingerastet sind. Diese können von Hand oder mit Hilfe eines Schraubendrehers betätigt werden, wobei die Spannweite dieser Verschlußelemente so ausgelegt ist, daß der Verschlußbereich mit eingelegter Dichtung mit ausreichendem Schließdruck zusammengepreßt wird. Im Bereich der Verschlüsse sind am Muffenrohr Rippen so angebracht, daß die Verschlußelemente formschlüssig eingebettet werden und so gegen zufälliges Öffnen durch Anstoßen oder Öffnen von Hand gesichert sind. Als weiterer Zugriffschutz kann zur Abdeckung über alle Verschlußelemente eine entsprechende Abdeckleiste aufgesteckt werden, welche zusätzlich an den Dichtungskörpern angeschraubt werden kann.

Die Abdichtung der Dichtungskörper zum Muffenrohr hin erfolgt mit einer elastischen Profildichtung, die auf beiden Dichtungsseiten ein Wellenhohlprofil aufweist. Diese Profildichtung kann als geschlossener Ring oder auch geschnitten verwendet werden, wobei im letzteren Fall dann ein Verbindungselement, zum Beispiel Joiner genannt, verwendet wird. Dieses Verbindungselement wird an den offenen Enden der Profildichtung in die Öffnungen des Hohlraums gesteckt und zusammengeschoben.

Die Befestigung der Muffe an einem Mast, einem Tragseil oder an einer Wand erfolgt mit einem Muffenbefestigungsteil, das an den Ansätzen der Dichtungskörper zum Beispiel mit selbstschneidenden Schrauben befestigt wird. Das Muffenbefestigungsteil ist universell ausgebildet und weist Befestigungselemente für die verschiedenen Befestigungsarten auf.

Die Erfindung wird nun anhand von sechzehn Figuren näher erläutert.
- Figur 1: zeigt zwei über Verbindungsschienen miteinander gekoppelte Dichtungskörper für eine Kabelmuffe.
- Figur 2: zeigt eine Verbindungsschiene.
- Figur 3: zeigt ein Muffenrohr.
- Figur 4: zeigt den Verschlußbereich eines Längsrandes des Muffenrohres.
- Figur 5: zeigt einen Teilquerschnitt durch das Muffenrohr.
- Figur 6: zeigt ein Dichtungskörpersegment eines zweigeteilten Dichtungskörpers in Frontansicht.
- Figur 7: zeigt das Dichtungskörpersegment nach Figur 6 mit der Ansicht auf die Trennebene.
- Figur 8: zeigt eine Kabelabfangvorrichtung in Draufsicht.
- Figur 9: zeigt die Abfangvorrichtung im Querschnitt.
- Figur 10: zeigt eine Profildichtung zur Abdichtung zwischen Muffenrohr und Dichtungskörper.
- Figur 11: zeigt ein Übergangsglied für eine geteilte Ringdichtung.
- Figur 12: zeigt eine Lehre zur Bestimmung der Maße für eine Kabeleinführungsöffnung.
- Figur 13: zeigt ein Muffenbefestigungsteil.
- Figur 14: zeigt ein mit Dichtungswickel und Kabelabfangvorrichtung präpariertes Kabel.
- Figur 15: zeigt ein Verschlußelement in Draufsicht.
- Figur 16: zeigt das Verschlußelement in Seitenansicht.

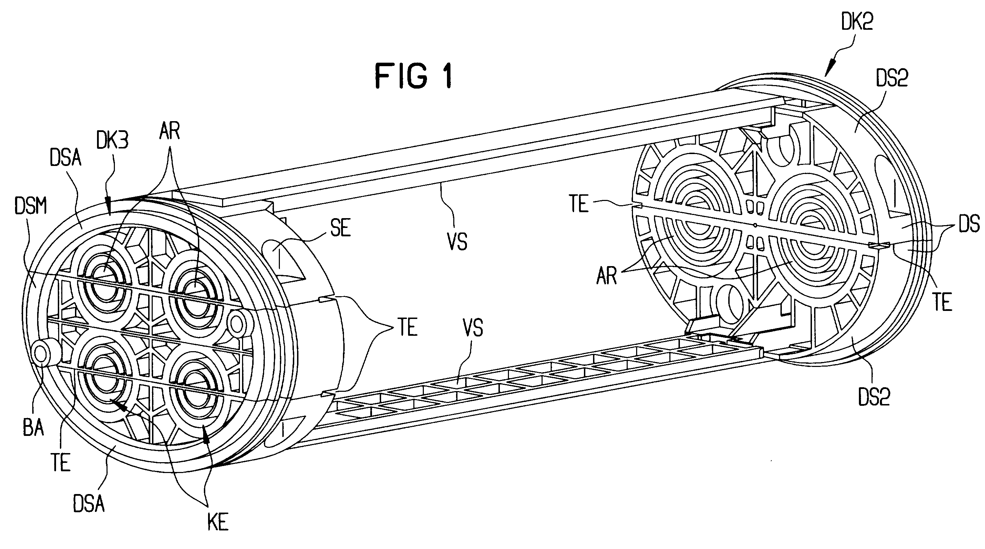

In Figur 1 ist die Kabelmuffe gemäß der Erfindung, jedoch ohne Muffenrohr dargestellt. Sie besteht aus zwei stirnseitigen, kreisrunden Dichtungskörpern DK2 und DK3, wobei der Dichtungskörper DK2 aus zwei gleichen Dichtungskörpersegmenten DS2 und der Dichtkörper DK3 aus drei Dichtungskörpersegmenten DSA, DSM und DSA bestehen. In den jeweiligen Trennebenen TE zwischen den einzelnen Dichtungskörpersegmenten ist plastische Dichtungsmasse eingelegt. Die Kabeleinführungsöffnungen KE liegen jeweils mittig in den Trennebenen TE, so daß auch ungeschnittene Kabel eingeführt werden können. Im Anlieferungszustand sind alle Kabeleinführungsöffnungen KE durch konzentrisch angeordnete und über dünne Stege zusammenhängende Anpassungsringe AR verschlossen. Diese dünnen Stege werden durch kreisförmige Profilnuten gebildet und dienen der leichten Austrennung von Anpassungsringen AR. Je nach Bedarf wird dann durch Austrennen von Anpassungsringen AR die Kabeleinführungsöffnung dem Durchmesser des einzuführenden Kabels angepaßt. Bei diesem Ausführungsbeispiel sind im dreigeteilten Dichtungskörper DK3 vier Kabeleinführungsöffnungen KE und im zweigeteilten Dichtungskörper DK2 zwei Kabeleinführungsöffnungen vorgesehen. Die Dichtungskörpersegmente DSA, DSM und DSA des Dichtungskörpers DK3 bzw. die Dichtungskörpersegmente DS2 und DS2 des Dichtungskörpers DK2 werden mit Hilfe von Schrauben unter Zwischenlage von Dichtungsmaterial, zum Beispiel eines Dichtungsbandes, aufeinander gepreßt bis der nötige Schließdruck erreicht ist. Die beiden Dichtungskörper DK2 bzw. DK3 besitzen Ansätze, an denen Verbindungsschienen VS angesetzt werden, so daß diese jeweils im richtigen Abstand zueinander gehalten werden.

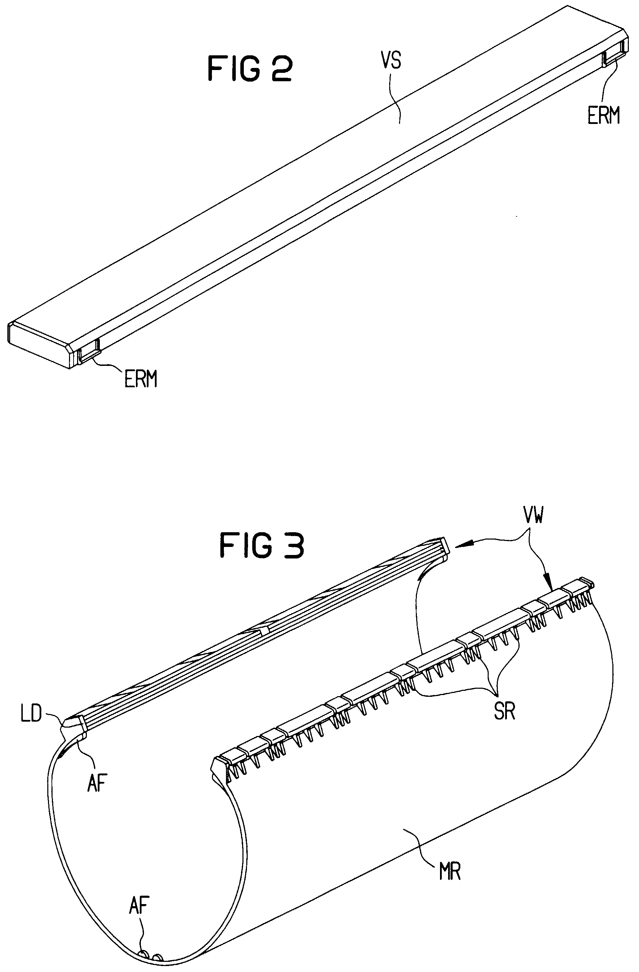

Figur 2 zeigt eine Verbindungsschiene VS, die vorzugsweise aus Kunststoff hergestellt ist. Sie wird an den Ansätzen der Dichtungskörper angesetzt, in diesem Fall mit Hilfe eines Einrastmechanismus ERM. An dieser Verbindungsschiene sind auch Befestigungen für Muffeneinbauteile vorgesehen, wie zum Beispiel Ansätze oder Rasterungen für Spleißhalterungen oder dergleichen.

Figur 3 zeigt das Muffenrohr MR, das auf die Dichtungskörper aufgezogen und verschlossen wird. Hierzu sind entlang des Längsschlitzes Verschlußwülste VW angeordnet, die mit Hilfe von Verschlußelementen zum Beispiel in Form von Einzelschnallen unter Zwischenlage einer Längsdichtung LD dicht zusammengepreßt werden. An den Stirnseiten sind Anformungen AF vorgesehen, die ein Abwandern der Dichtungskörper verhindern. Die Verschlußwülste sind mit Verstärkungen und Schutzrippen SR versehen, um die nötige Versteifung der Verschlußwülste VW zu gewährleisten.

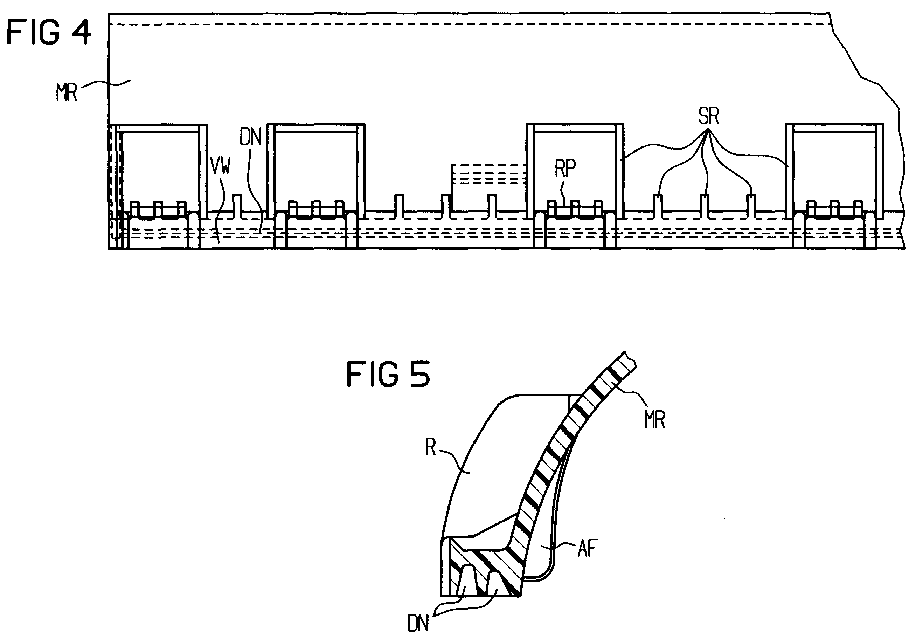

Figur 4 verdeutlicht den längsseitigen Verschlußbereich des Muffenrohres MR mit Verstärkungs- und Schutzrippen SR entlang eines Verschlußwulstes VW. Außerdem sind in den Bereichen der Verschlußelemente (nicht gezeichnet) Rastprofile angeformt, in die die Verschlußelemente, zum Beispiel Schnappklemmen, unverlierbar eingerastet werden. Außerdem ist die längsverlaufende Dichtungsnut DN angedeutet, in die eine elastische Dichtung eingelegt wird.

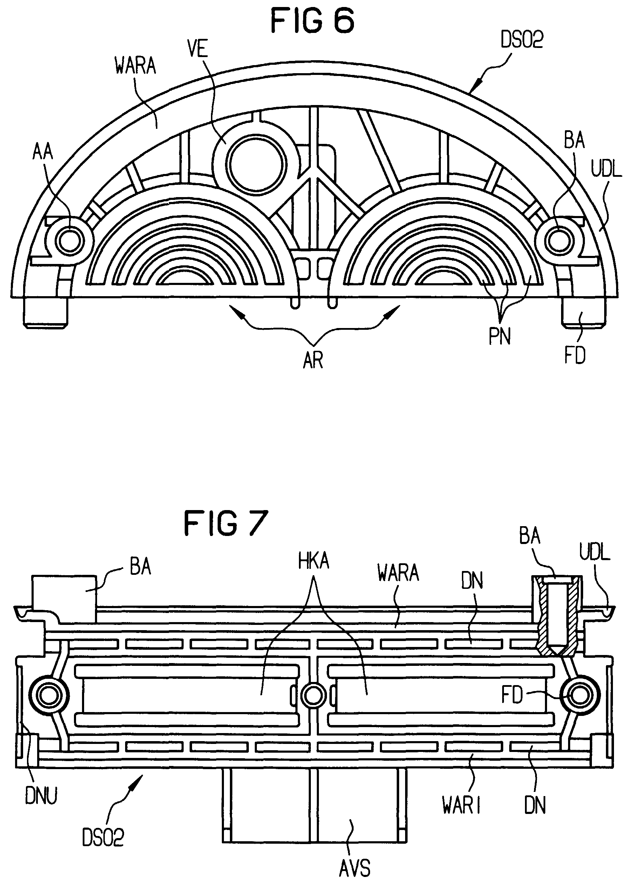

Figur 5 zeigt im Querschnitt den Verschlußbereich des Muffenrohres MR, wobei eine der Schutzrippen SR und eine Anformung AF am Ende des Muffenrohres MR zu sehen sind. Im längsseitigen Verschlußbereich selbst sind hier zwei parallel verlaufende Dichtungsnuten DN zur Aufnahme von Dichtungselementen vorhanden.

Figur 6 zeigt als Alternative zu kreisförmigen Dichtungskörpern ein Dichtungskörpersegment DSO2 für einen zweigeteilten, ovalen Dichtungskörper für ein ovales Muffenrohr. Die Verhältnisse bei kreisförmigen und ovalen Muffentypen gleichen sich jedoch, so daß auf diese Gestaltung nicht näher eingegangen werden muß. Aus der stirnseitigen Ansicht des dargestellten ovalen Dichtungskörpersegmentes DS2 sind die einzelnen zusammenhängenden Anpassungsringe AR der äußeren Dichtungswandung WARA deutlich zu erkennen, wobei die Anpassungsringe AR nur über dünne Stege, die durch Profilnuten PN gebildet sind, zusammenhängen und zunächst eine geschlossene Kabeleinführungsöffnung bilden. Durch Austrennen von einzelnen Anpassungsringen AR kann der Durchmesser der Kabeleinführungsöffnung jeweils dem Durchmesser des einzuführenden Kabels angepaßt werden. Die einzelnen Dichtungskörpersegmente DS2 werden durch Führungsdorne FD beim Zusammenbau gegenseitig justiert. Außerdem sind an der äußeren Dichtungskörperwandung WARA auch Befestigungsansätze BA vorgesehen, an denen Muffenbefestigungsteile angesetzt werden können. Für den Einsatz eines Ventils oder einer Erddurchführung ist eine vorgeprägte, jedoch zunächst verschlossene Öffnung VE vorgesehen. Eine umlaufende Lippendichtung UDL am äußeren Umfang des Dichtungskörpers gewährleistet Staub- und Spritzwasserschutz für die umlaufende Dichtung zwischen dem Dichtungskörper und dem Muffenrohr.

Figur 7 zeigt eine Draufsicht auf das Dichtungskörpersegment DS2, so daß die Ausbildung der Trennebene deutlich wird. Daraus ist zu erkennen, daß eine äußere Wandung WARA und eine innere Wandung WARI in Achsrichtung hintereinanderliegend angeordnet sind und daß dazwischenliegend in jedem Kabeleinführungsbereich ein Hohlraum HKA für eine Kabelabfangvorrichtung ausgebildet ist. In diesen ringförmigen Hohlraum HKA werden Fortsätze bzw. Rippen einer aus einem Band gebildeten Kabelabfangvorrichtung eingesenkt, wobei sich in Achsrichtung die erforderliche Arretierung ergibt, wie noch erläutert wird. In den Flächen der äußeren und inneren Wandungen WARA und WARI, die aus den Anpassungsringen AR gebildet werden, sind Dichtungsnuten DN eingebracht, in welche die Dichtungsmasse des Dichtungswickels beim Zusammenpressen der Dichtungskörpersegmente ausweichen, wodurch die Dichtwirkung verbessert wird. An der äußeren Wandung WARA sind die Befestigungsansätze BA zu erkennen, sowie die umlaufende Dichtungslippe UDL. Auf der Innenseite des Dichtungskörpersegmentes DS2 ist ein abstehender Ansatz AVS ausgebildet, an den die Verbindungsschiene VS, zum Beispiel nach Figur 2, angesetzt wird. Entsprechend der Ausbildung der Verbindungsschiene sind hier die korrespondierenden Befestigungsmittel vorgesehen, zum Beispiel Rastelemente.

Schließlich sind noch die Führungsdorne FD zu erkennen, die beim Zusammensetzen der Dichtungskörpersegmente in Bohrungen des Gegenstückes eintauchen.

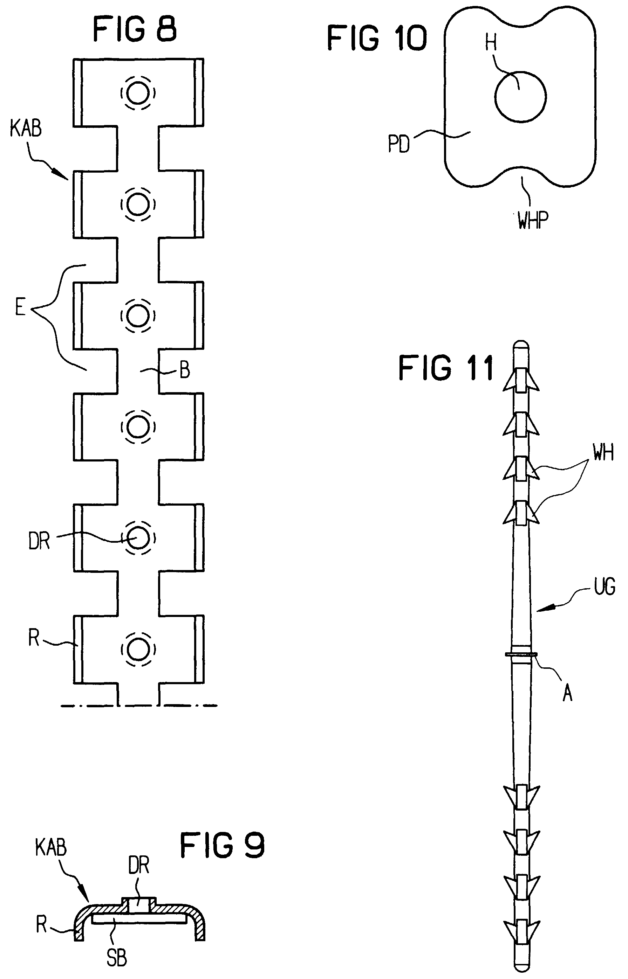

Figur 8 zeigt eine Kabelabfangvorrichtung KAB in Form eines Bandes B, das seitliche Einschnitte E aufweist, um es möglichst flexibel zu gestalten. In der Mitte des Bandes B sind Durchrisse DR eingebracht, die sich beim Umlegen um das Kabel griffig in den Kabelmantel krallen. Dabei stehen dann die seitlich abgewinkelten Rippen R nach außen ab, so daß sie beim Einlegen in die Kabeleinführungsöffnungen des Dichtungskörpers in die dafür vorgesehenen Hohlräume HKA zwischen der äußeren und der inneren Wandung des Dichtungskörpersegmentes eintauchen. Das Band B wird mit einem Spannband SB oder einer Schlauchklemme auf dem Kabel befestigt.

Figur 9 zeigt in einem Querschnitt die Kabelabfangvorrichtung KAB bezüglich der Gestaltung der Durchrisse DR und der seitlich abgewinkelten Rippen R mit dem Spannband SB zur Befestigung auf dem Kabel.

Figur 10 verdeutlicht eine Profildichtung PD für die Abdichtung zwischen dem Dichtungskörper und dem Muffenrohr. Sie besteht aus elastischem Material, zum Beispiel aus Silikon, und weist einen längs verlaufenden Hohlraum H auf. Diese Profildichtung PD kann als geschlossener Ring oder auch als längsgestrecktes Dichtungsstück ausgebildet sein, wobei bei der letztgenannten Ausführung an der Stoßstelle zur Bildung eines Ringes ein Übergangsglied UG in den Hohlraum der sich gegenüber liegenden Enden zur Überbrückung eingesetzt wird. Die Auflageflächen, das heißt die Dichtflächen der Profildichtung PD sind als Wellhohlprofil WHP gestaltet, wodurch praktisch eine Doppeldichtung gebildet wird, die besonders gute Dichtverhältnisse gewährleistet.

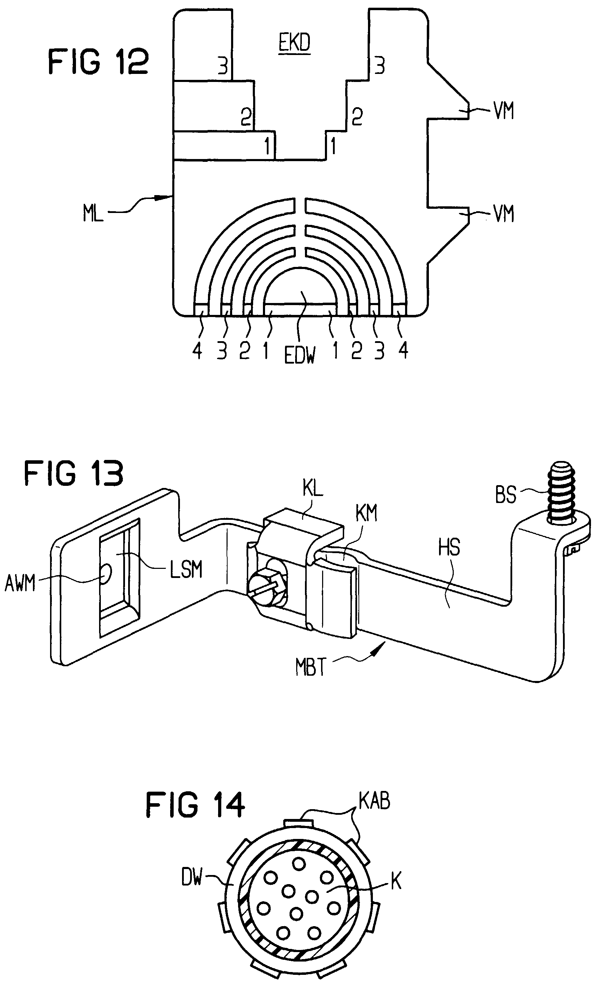

Figur 11 zeigt ein Überbrückungsglied UG, das in den Hohlraum der Profildichtung PD eingeführt wird. An den Enden des Überbrückungsgliedes sind jeweils Widerhaken WH angeordnet, um ein Herausrutschen und damit eine Leckstelle zu verhindern. In der Mitte des Übergangsgliedes UG ist ein Anschlag A angebracht, durch den gewährleistet wird, daß das Überbrückungsglied UG mittig eingesetzt wird.

Figur 12 zeigt eine Maßlehre ML, mit der der Durchmesser des einzuführenden Kabels und damit die Anzahl der zu entfernenden Anpassungsringe und die Stärke des dafür aufzubringenden Dichtungswickels in den Kabeleinführungsöffnungen ermittelt werden kann. Die eingeprägten Zahlen bei der Schablone EKD für die Ermittlung des Durchmessers des Kabels geben Hinweis für die Schablone EDW zur Ermittlung der Entfernung der Anpassungsringe und der Stärke des Dichtungswickels. Seitlich sind an der Maßlehre noch Ansätze VM angeordnet, mit deren Hilfe der Abstand zwischen gegenüberliegenden Dichtungskörpersegmenten gemessen wird. Dabei greifen diese Ansätze VM in Aussparungen an den Dichtungskörpersegmenten ein. Wenn sich diese Ansätze VM dort einschieben lassen, ist der nötige Abstand und damit die nötige Dichtungspressung erreicht.

Figur 13 zeigt ein Muffenbefestigungsteil MBT, das aus einer gewinkelten Halterungsschiene HS besteht. Solche Muffenbefestigungsteile MBT werden in die beschriebenen Ansätze an den Außenseiten der Dichtungskörper mit Hilfe der Befestigungsschrauben BS befestigt. Die Abwinkelung der Halterungsschiene HS ist so gewählt, daß eine Befestigung an einem Mast mit einer Lasche LSM, an einer Wand mit Schrauben durch eine entsprechende Bohrung AWM oder an einem Tragseil mit einer Klemme KL, die ein entsprechendes Klemmenmaul KM aufweist, erfolgen kann.

Figur 14 zeigt schließlich ein mit einer Kabelabfangvorrichtung KAB und einem Dichtungswickel DW versehenes Kabel K, wobei der Dichtungswickel DW in der Trennebene und die Kabelabfangrichtung KAB in den vorgesehenen Hohlräumen angeordnet werden.

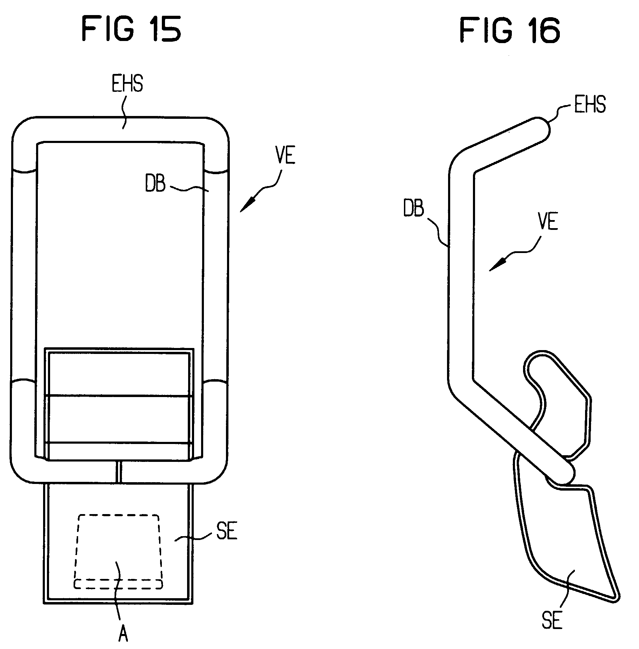

Figur 15 zeigt ein Verschlußelement VE in Form einer Schnappklemme. Sie besteht aus einem geformten Drahtbügel DB, der mit seiner Einhängeseite EHS in die Halterung des Verschlußwulstes am Muffenrohr eingehängt wird. Auf der gegenüberliegenden Seite des Drahtbügels DB ist ein Spannelement SE angeordnet, das am Gegenlager des zweiten Verschlußwulstes am Muffenrohr angesetzt wird. Durch Umkippen des Spannelementes wird der Drahtbügel gespannt und bei den Verschlußwülsten gegeneinander gepreßt. Eine Aussparung A dient zum Ansatz eines Hebelwerkzeugs, z.B. eines Schraubendrehers.

Figur 16 zeigt das Verschlußelement VE in Seitenansicht, woraus hervorgeht, daß der Drahtbügel DB so ausgeformt ist, daß er die beiden Verschlußwülste des Muffenrohres überspannt. Durch das als Hebel wirkende Spannelement SE wird der Schließdruck erzeugt.

## Patentansprüche

1. Kabelmuffe bestehend aus einem Muffenrohr und mindestens einem stirnseitigen, quergeteilten Dichtungskörper mit anpaßbaren Kabeleinführungsöffnungen, wobei die Anpassung durch Austrennen von konzentrisch angeordneten Anpassungsringen erfolgt,
**dadurch gekennzeichnet,**
daß der Dichtungskörper (DK1, DK2) aus zwei in Kabelachsrichtung hintereinander liegenden Wandungen (WARI, WARA) gebildet ist, daß die Wandungen (WARI, WARA) in den Kabeleinführungsöffnungen (KE) aus den austrennbaren, konzentrisch angeordneten Anpassungsringen (AR) gebildet sind, daß in den Kabeleinführungsöffnungen (KE) zwischen den beiden Wandungen (WARI, WARA) jeweils ein Hohlraum (HKA) für eine Kabelabfangvorrichtung (KAB) angeordnet ist, daß die an den Kabeln zu montierenden Kabelabfangvorrichtungen (KAB) in die Hohlräume (HKA) beim Einführen der Kabel in die Kabeleinführungsöffnungen (KE) einsenkbar sind, daß jeweils ein Dichtungswickel (DW) aus plastischem Dichtungsmaterial in den Bereichen der Wandungen (WARI, WARA) der Kabeleinführungsöffnungen (KE) auf den einzuführenden Kabeln (K) angeordnet ist, wobei die Wandungen (WARI, WARA) des Dichtungskörpers (DK1, DK2) in den Trennebenen (TE) Dichtungsnuten (DN) aufweisen.

2. Kabelmuffe nach Anspruch 1,
**dadurch gekennzeichnet,**
daß der Dichtungskörper (DK2) aus zwei Dichtungskörpersegmenten (DS2) besteht.

3. Kabelmuffe nach Anspruch 1,
**dadurch gekennzeichnet,**
daß der Dichtungskörper (DK3) aus drei Dichtungskörpersegmenten (DSA, DSM, DSA) besteht.

4. Kabelmuffe nach einem der vorhergehenden Ansprüche,
**dadurch gekennzeichnet,**
daß die Kabelabfangvorrichtungen (KAB) aus einem den Hohlräumen (HKA) des Dichtungskörpers (DK2, DK3) angepaßten, U-förmig gebogenen Band (B) mit Einschnitten (E) besteht, daß das Band (B) auf der dem eingeführten Kabel (K) zugewandten Seite Durchrisse (DR) aufweist und daß das Band (B) mit einem Spannband (SB) auf dem Kabel (K) befestigt ist.

5. Kabelmuffe nach einem der vorhergehenden Ansprüche,
**dadurch gekennzeichnet,**
daß die Anzahl der auszutrennenden Anpassungsringe (AR) und die Stärke des Dichtungswickels (DW) in den Kabeleinführungsöffnungen (KE), sowie ein erforderliches Verschlußmaß (VM) zwischen den Dichtungskörpersegmenten (DS2-DS2, DSA-DSM-DSA) beim Zusammenpressen mit Hilfe einer Maßlehre (ML) ermittelbar sind.

6. Kabelmuffe nach einem der vorhergehenden Ansprüche,
**dadurch gekennzeichnet,**
daß eine federnde Dichtlippe (UDL) am äußeren Umfang des Dichtungskörpers (DK2, DK3) umlaufend angeordnet ist.

7. Kabelmuffe nach einem der vorhergehenden Ansprüche,
**dadurch gekennzeichnet,**
daß Befestigungsansätze (BA) an der Außenseite des Dichtungskörpers (DK2, DK3) angeordnet sind.

8. Kabelmuffe nach Anspruch 7,
**dadurch gekennzeichnet,**
daß Muffenbefestigungsteile (MBT) an den Befestigungsansätzen (BA) des Dichtungskörpers (DK2, DK3) ansetzbar sind.

9. Kabelmuffe nach Anspruch 8,
**dadurch gekennzeichnet,**
daß das Muffenbefestigungsteil (MBT) aus einer gewinkelten Halterungsschiene (HS) besteht, an der Klemmen (KL), Laschen (LSM) und Bohrungen (AWM) für Befestigungselemente für Seil-, Mast- und Wandmontage angeordnet sind.

10. Kabelmuffe nach einem der vorhergehenden Ansprüche,
**dadurch gekennzeichnet,**
daß die beiden stirnseitigen Dichtungskörper (DK2, DK3) über mindestens eine Verbindungsschiene (VS) aus Kunststoff miteinander verbunden sind, vorzugsweise durch Einrastmechanismen (ERM).

11. Kabelmuffe nach Anspruch 10,
**dadurch gekennzeichnet,**
daß die Verbindungsschiene (VS) Aufnahmen für Spleißelemente, vorzugsweise für Lichtwellenleiter-Spleißkassetten aufweist.

12. Kabelmuffe nach einem der vorhergehenden Ansprüche,
**dadurch gekennzeichnet,**
daß das Muffenrohr (MR) mit einzelnen Verschlußelementen (VE) in Form von Schnappklemmen verschließbar ist, daß die Verschlußelemente (VE) in hinterschnittenen Verschlußrippen (RP) von Verschlußwülsten (VW) unverlierbar einsetzbar sind und
daß die Verschlußelemente (VE) mit seitlichen Schutzrippen (SR) gesichert sind.

13. Kabelmuffe nach einem der vorhergehenden Ansprüche,
**dadurch gekennzeichnet,**
daß der Dichtungskörper (DK2, DK3) am äußeren Umfang eine umlaufende Dichtungsnut (DNU) zur Aufnahme einer Profildichtung (PD), vorzugsweise mit beidseitigem Wellenhohlprofil (WHP) aufweist.

14. Kabelmuffe nach Anspruch 13,
**dadurch gekennzeichnet,**
daß die Profildichtung (PD) aus elastischem Material besteht, geteilt ist und daß in den umlaufenden Hohlraum (H) im Bereich der Trennebene ein Überbrückungsglied (UG) einsetzbar ist.

15. Kabelmuffe nach Anspruch 5,
**dadurch gekennzeichnet,**
daß die Maßlehre (ML) als Schablone stufenförmige Einschnitte (EKD) zur Ermittlung des Kabeldurchmessers und damit zur Ermittlung der auszutrennenden Anpassungsringe (AR), eine Schablone (EWD) mit Ausschnitten zur Ermittlung des zu erstellenden Dichtungswickels (DW) und Ansätze (VM) zur Ermittlung des Abstandes zwischen den Dichtungskörpersegmenten (DS2-DS2, DSA-DSM-DSA) bei der Montage aufweist.

16. Kabelmuffe nach Anspruch 12,
**dadurch gekennzeichnet,**
daß das Verschlußelement (VE) aus einem rechteckförmig gebogenen Drahtbügel (DB) besteht, der mit einer Einhängeseite (EHS) an einem Wulst des Muffenrohres einhängbar ist und an dessen gegenüberliegender Seite ein Spannelement (SE) kippbar angeordnet ist.
